# EUROPEAN PATENT SPECIFICATION

(11) **EP 4 478 044 B1**
(45) Date of publication and mention of the grant of the patent: **04.02.2026**
(21) Application number: 24176845.6
(22) Date of filing: 20.05.2024
(51) Int. Cl.: G01N 30/72, G01N 31/12

(54) **ANALYSIS SYSTEM**
ANALYSESYSTEM
SYSTÈME D'ANALYSE

(30) Priority: 12.06.2023 JP 2023095978
(43) Date of publication of application: 18.12.2024
(73) Proprietor: Shimadzu Corporation, Nakagyo-ku, Kyoto-shi, Kyoto 604-8511 (JP)
(72) Inventor: Giusti, Pierre, 76600 Le Havre (FR); SUZUKI, Takamasa, Kyoto, 604-8511 (JP); Encinar, Jorge Ruiz, 33006 Oviedo (ES); Bouyssiere, Brice, 64160 Serres Morlaas (FR)
(74) Representative: Mewburn Ellis LLP

(56) References cited:
- EP-A1- 2 236 208
- US-A- 4 409 336
- US-A- 5 012 052

## Description

### BACKGROUND OF THE INVENTION

### 1. TECHNICAL FIELD

The present invention relates to an analysis system including an oxidation decomposition device configured to oxidatively decompose a sample.

### 2. BACKGROUND ART

A method for detecting or quantitatively determining an oxygen component in a sample containing an oxygen component (e.g., ¹⁶O) has been proposed (see JP-A-2019-508711). In this method, the sample is oxidatively decomposed using oxidation gas containing an oxygen isotope (e.g., ¹⁸O) different from natural isotopes in composition and distribution, and the oxidatively-decomposed composition is analyzed using, e.g., a mass spectroscope. The oxygen component in the composition analyzed using, e.g., the mass spectroscope can be identified as being derived from the sample if the oxygen component is ¹⁶O and as being derived from the oxidation gas the oxygen component is ¹⁸O.

### SUMMARY OF THE INVENTION

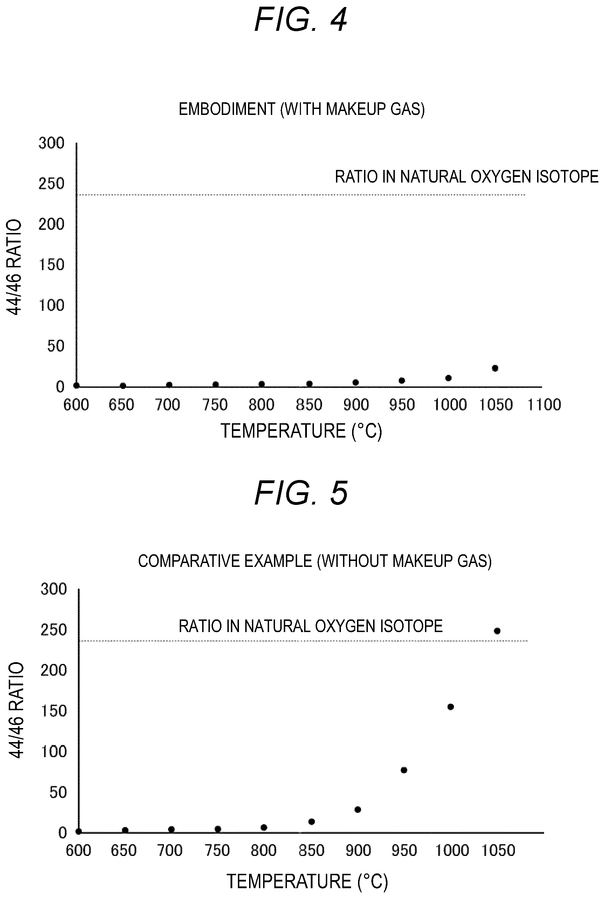

In order to perform the above-described method, it is necessary to fully oxidatively decompose the sample by supplying the sample and the oxidation gas into a reaction tube heated to a high temperature (e.g., about 600 to 1000°C), and for this reason, a material having a high heat resistance needs to be used as the material of the reaction tube. A ceramics material such as alumina is conceivable as the material having the high heat resistance. However, experimental results show that if oxidation decomposition is performed using a reaction tube made of alumina, a composition ratio after oxidation decomposition changes as the temperature of heating of the reaction tube increases. For example, it has been found that in a case where the ratio of C¹⁶O₂ (m/z = 44) to C¹⁸O¹⁶O (m/z = 46) is detected while the temperature of heating of the reaction tube is changed, the percentage of C¹⁶O₂ increases as the temperature of heating of the reaction tube increases (see Fig. 5). This is because of the assumption that C¹⁸O¹⁶O generated by oxidation decomposition using the oxidation gas containing ¹⁸O changes into C¹⁶O₂ for some reason. If analysis described in the background art is performed under such a situation, it cannot be accurately determined whether the oxygen component in the composition detected by, e.g., the mass spectroscope is derived from the sample or the oxidation gas.

For these reasons, the present invention is intended to provide an analysis system having improved detection or quantitative determination accuracy in a method for detecting or quantitatively determining an oxygen component in a sample by oxidatively decomposing the sample using oxidation gas containing an oxygen isotope different from natural isotopes in composition and distribution and detecting a composition obtained by oxidation decomposition.

As a result of intensive study on a cause for the above-described change from C¹⁸O¹⁶O to C¹⁶O₂, it has been found that substitution between ¹⁶O contained in alumina (Al₂O₃) which is the material of the reaction tube and ¹⁸O of C¹⁸O¹⁶O is caused while C¹⁸O¹⁶O passes through the reaction tube. Based on such a finding, the following analysis system has been invented.

That is, the analysis system according to the present invention is an analysis system for detecting and/or quantitatively determining a compound containing a specific oxygen component in a sample, the analysis system including
an oxidation decomposition device having an inlet and an outlet and configured to oxidatively decompose the sample introduced through the inlet to discharge the sample through the outlet, and a detector configured to detect an oxidation reactant oxidatively decomposed by the oxidation decomposition device, and
the oxidation decomposition device including
   a reaction tube having one end and the other end such that the one end is arranged on the inlet side and the other end is arranged on the outlet side and configured to oxidatively decompose the sample inside,
   a heating furnace housing the reaction tube inside and configured to heat the reaction tube,
   an oxidation gas supplier configured to supply oxidation gas used for oxidizing the sample and containing an oxygen component of an isotope different from the specific oxygen component,
   a makeup gas supplier configured to supply makeup gas which is inert gas not influencing oxidation decomposition of the sample, and
   an interface having a structure of introducing the oxidation gas supplied from the oxidation gas supplier and the makeup gas supplied from the makeup gas supplier into the reaction tube together with the sample introduced through the inlet.

According to the analysis system of the present invention, the interface of the oxidation decomposition device has the structure of introducing the oxidation gas and the makeup gas into the reaction tube together with the sample introduced through the inlet. Therefore, an opportunity of the composition after oxidation decomposition and the inner surface of the reaction tube contacting each other in the reaction tube is limited and substitution between ¹⁶O contained in the material of the reaction tube and the oxygen isotope contained in the composition after oxidation decomposition is reduced. Thus, the detection or quantitative determination accuracy is improved in the method for detecting or quantitatively determining the oxygen component in the sample by oxidatively decomposing the sample using the oxidation gas containing the oxygen isotope different from natural isotopes in composition and distribution and detecting the composition obtained by oxidation decomposition.

### BRIEF DESCRIPTION OF THE DRAWINGS

Fig. 1 is a flow path configuration diagram in a GC-Comb-MS mode in one embodiment of an analysis system;
Fig. 2 is a flow path configuration diagram in a GC-MS mode in the embodiment;
Fig. 3 is a sectional view showing one example of the structure of an oxidation decomposition device of the embodiment;
Fig. 4 is a graph showing results of verification on a relationship between the 44/46 ratio of 18-methanol and a heating furnace temperature in the GC-Comb-MS mode of the embodiment;
Fig. 5 is a graph showing results of verification on a relationship between the 44/46 ratio of 18-methanol and the heating furnace temperature in the GC-Comb-MS mode in a case where no makeup gas is used in the oxidation decomposition device;
Fig. 6 is a graph showing a relationship between the length of a resistance tube and fluctuation in the outlet pressure of a reaction tube when the GC-MS mode is switched to the GC-Comb-MS mode in the embodiment; and
Fig. 7 is a graph showing a relationship between the length of the resistance tube and fluctuation in the base line of a detector signal of a mass spectrometer when the GC-MS mode is switched to the GC-Comb-MS mode in the embodiment.

### DETAILED DESCRIPTION OF THE EXEMPLARY EMBODIMENTS

Hereinafter, one embodiment of an analysis system according to the present invention will be described with reference to the drawings.

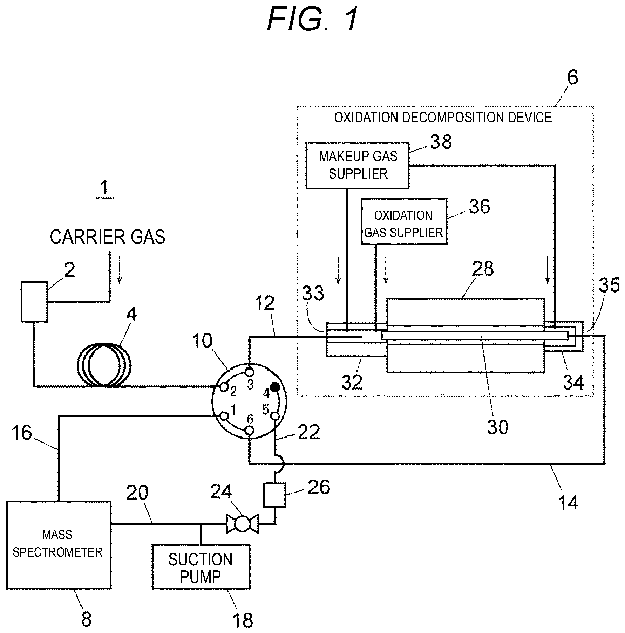

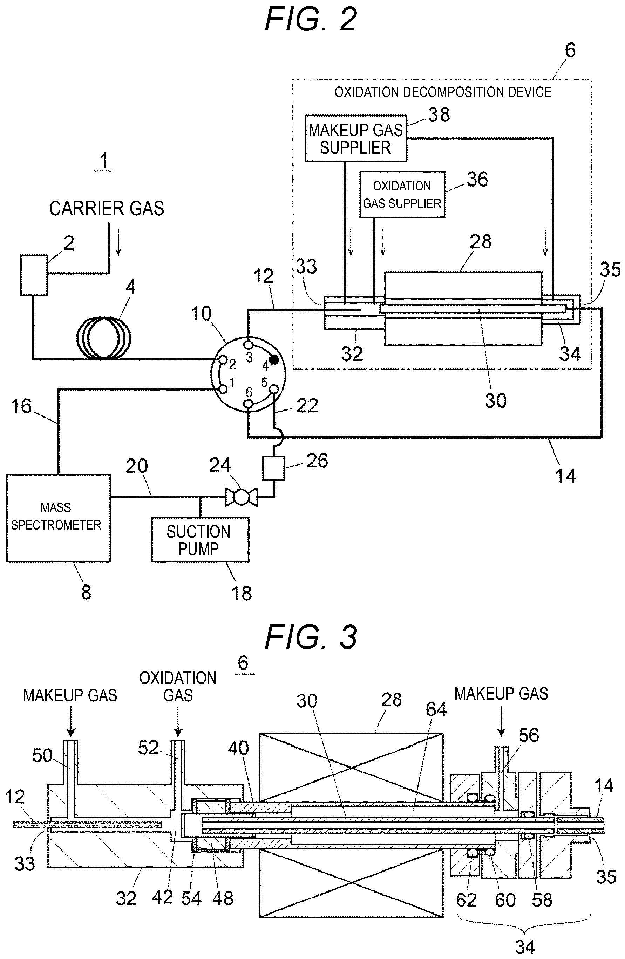

As shown in Figs. 1 and 2, an analysis system 1 mainly includes a sample vaporization chamber 2, a separation column 4, an oxidation decomposition device 6, a mass spectrometer 8, and a switching valve 10. The sample vaporization chamber 2 and the separation column 4 form a gas chromatograph. An injected sample is vaporized in the sample vaporization chamber 2, and the vaporized sample is introduced into the separation column 4 together with carrier gas. In the separation column 4, components in the sample are separated from each other. The gas chromatograph including the sample vaporization chamber 2 and the separation column 4 forms a sample supply device configured to supply the sample to the oxidation decomposition device 6.

The switching valve 10 has first to sixth ports, and is a two-position valve switchable between two positions, i.e., a position (position in Fig. 1) in which the first port and the sixth port are in fluid communication with each other, the second port and the third port are in fluid communication with each other, and the fourth port and the fifth port are in fluid communication with each other and a position (position in Fig. 2) in which the first port and the second port are in fluid communication with each other, the third port and the fourth port are in fluid communication with each other, and the fifth port and the sixth port are in fluid communication with each other.

A flow path 16 communicating with the inlet of the mass spectrometer 8 is in fluid connection with the first port of the switching valve 10, the downstream end of the separation column 4 is in fluid connection with the second port, an inlet flow path 12 communicating with the oxidation decomposition device 6 is in fluid connection with the third port, the fourth port is closed, a depressurization flow path 22 is in fluid connection with the fifth port, and an outlet flow path 14 communicating with the outlet of the oxidation decomposition device 6 is in fluid connection with the sixth port.

The switching valve 10 is a switching mechanism configured to switch the gas chromatograph including the sample vaporization chamber 2 and the separation column 4 and the mass spectrometer 8 between a GC-MS mode (first state) in which the gas chromatograph and the mass spectrometer 8 are in fluid connection with each other without the oxidation decomposition device 6 interposed therebetween and a GC-Comb-MS mode (second state) in which the gas chromatograph and the mass spectrometer 8 are in fluid connection with each other with the oxidation decomposition device 6 interposed therebetween. Fig. 1 shows a flow path configuration in the GC-Comb-MS mode, and Fig. 2 shows a flow path configuration in the GC-MS mode.

The oxidation decomposition device 6 includes a heating furnace 28, a reaction tube 30, an interface 32, an outlet adaptor 34, an oxidation gas supplier 36, and a makeup gas supplier 38.

The reaction tube 30 is a circular tubular member configured such that at least the inner surface thereof is made of oxide containing ¹⁶O, such as alumina, and having a high heat resistance. The reaction tube 30 is housed in the heating furnace 28 so as to penetrate the heating furnace 28, and is configured to oxidatively decompose the sample therein. The heating furnace 28 heats the reaction tube 30 housed inside to a set temperature.

The interface 32 is provided on one end side (left side in the figure) of the reaction tube 30. The interface 32 has an inlet 33, and the downstream end of the inlet flow path 12 is in fluid connection with the inlet 33.

The outlet adaptor 34 is provided on the other end side (right side in the figure) of the reaction tube 30. With the outlet adaptor 34, the upstream end of the outlet flow path 14 is in fluid connection with the other end of the reaction tube 30.

The oxidation gas supplier 36 is a tank configured to supply, as oxidation gas, gas containing an oxygen isotope different from a specific oxygen compound contained in an oxygen-containing compound targeted for detection and/or quantitative determination. For example, in the case of targeting a compound containing ¹⁶O for detection and/or quantitative determination, gas containing ¹⁷O or ¹⁸O as oxygen gas may be used as the oxidation gas. The oxidation gas may also contain inert gas such as helium gas or argon gas, and the ratio between the oxygen gas and the inert gas in the oxidation gas is, for example, 1 : 99. The oxidation gas supplied from the oxidation gas supplier 36 is introduced into the interface 32.

The makeup gas supplier 38 is a tank different from the oxidation gas supplier 36, which is configured to supply inert gas not influencing oxidation decomposition of the sample in the reaction tube 30. Examples of makeup gas include helium gas. The makeup gas supplied from the makeup gas supplier 38 is introduced into the interface 32 and the outlet adaptor 34.

In the GC-Comb-MS mode shown in Fig. 1, the inlet flow path 12 is connected to the downstream of the separation column 4, and the sample having flowed out of the separation column 4 is introduced into the interface 32 of the oxidation decomposition device 6 through the inlet flow path 12. The sample introduced into the interface 32 is introduced into the reaction tube 30 together with the oxidation gas supplied from the oxidation gas supplier 36 and the makeup gas supplied from the makeup gas supplier 38, and after having been oxidatively decomposed in the reaction tube 30, is introduced into the mass spectrometer 8.

Here, one example of a specific structure of the oxidation decomposition device 6 will be described with reference to Fig. 3.

A hollow cylindrical outer tube 40 is provided so as to surround the outer periphery of the reaction tube 30 of the oxidation decomposition device 6. The heating furnace 28 contacts the outer peripheral surface of the outer tube 40, and therefore, the outer tube 40 is heated by the heating furnace 28 and the reaction tube 30 passing inside the outer tube 40 is heated. The reaction tube 30 and the outer tube 40 do not contact each other, and there is a clearance 64 between the outer peripheral surface of the reaction tube 30 and the inner peripheral surface of the outer tube 40. Of the outer tube 40, a main portion housed in the heating furnace 28 may be made of a heat-resisting material such as alumina, and at least an end portion held on the interface 32 may be made of metal, for example.

In the interface 32, a space 42 where a pipe (hereinafter also referred to as a pipe 12) forming the inlet flow path 12 and the reaction tube 30 are in fluid connection with each other is provided. Although not shown in the figure, the outer peripheral surface of the outer tube 40 on one end side (left side in the figure) is provided with a thread. An opening is provided in the heating-furnace-28-side surface of the interface 32, and a thread to be screwed with the thread at the outer peripheral surface of the outer tube 40 on one end side is provided inside the opening. The outer tube 40 is held on the interface 32 in such a manner that the thread at the outer peripheral surface of the outer tube 40 on one end side is screwed with the thread inside the opening of the interface 32. In the opening of the interface 32, a holder 48 and a packing 54 are provided so as to be sandwiched between the far-side inner surface of the opening and the end portion of the outer tube 40. The holder 48 is for fixing the position of one end of the reaction tube 30 in the interface 32. The packing 54 is for avoiding gas in the internal space 42 from leaking to the outside of the interface 32 through the outside of the outer tube 40.

The surface of the interface 32 opposite to the heating furnace 28 is provided with a hole, which is the inlet 33, through which the pipe forming the inlet flow path 12 is inserted. The pipe 12 is air-tightly inserted into the internal space 42 of the interface 32 through the inlet 33, and extends toward one end of the reaction tube 30. The interface 32 is provided with a makeup gas introduction flow path 50 for introducing the makeup gas supplied from the makeup gas supplier 38 into the internal space 42 and an oxidation gas introduction flow path 52 for introducing the oxidation gas supplied from the oxidation gas supplier 36 into the internal space 42. The makeup gas introduced through the makeup gas introduction flow path 50 is introduced into a clearance between the inner surface of the interface 32 and the outer peripheral surface of the pipe 12, and the oxidation gas introduced through the oxidation gas introduction flow path 52 is introduced into between the downstream end of the pipe 12 and one end of the reaction tube 30. The makeup gas introduced through the makeup gas introduction flow path 50 avoids the sample introduced into the internal space 42 through the pipe 12 from flowing back to the inlet 33 side.

The outlet adaptor 34 has a structure of air-tightly holding the outer peripheral surface of the outer tube 40 on the other end side (right side in the figure) through O-rings 60, 62 and air-tightly holding the outer peripheral surface of the reaction tube 30 on the other end side (right side in the figure) through an O-ring 58. A pipe (hereinafter also referred to as a pipe 14) forming the outlet flow path 14 is air-tightly inserted through the surface of the outlet adaptor 34 opposite to the heating furnace 28, and in the outlet adaptor 34, the other end of the reaction tube 30 and the pipe 14 are air-tightly in fluid connection with each other. The outlet adaptor 34 is provided with a makeup gas introduction flow path 56 for introducing the makeup gas supplied from the makeup gas supplier 38 into the outlet adaptor 34. The makeup gas introduced through the makeup gas introduction flow path 56 flows into the internal space 42 of the interface 32 through the clearance 64 between the outer peripheral surface of the reaction tube 30 and the inner peripheral surface of the outer tube 40. This avoids the sample introduced into the internal space 42 of the interface 32 through the pipe 12 from flowing to the outlet adaptor 34 side through the outside of the reaction tube 30.

The sample introduced into the internal space 42 of the interface 32 through the pipe 12 flows in the reaction tube 30 together with the oxidation gas and the makeup gas, and after having been oxidatively decomposed in the reaction tube 30, is introduced into the mass spectrometer 8 through the pipe 14.

Figs. 4 and 5 show data in the GC-Comb-MS mode on the abundance ratio (44/46 ratio) between C¹⁶O₂ (mass number = 44) and C¹⁶O¹⁸O (mass number = 46) in the sample after oxidation decomposition based on mass spectrometric data at each temperature, the mass spectrometric data being acquired for different temperatures of the heating furnace 28 in a case where a gas mixture of ¹⁶O and inert gas (¹⁶O gas : inert gas = 1 : 99) is supplied as the oxidation gas and 18-ethanol (CH₃¹⁸OH) which is an oxygen-containing compound containing ¹⁸O is injected as the sample. Fig. 4 shows the data measured with supply of helium gas as the makeup gas, and Fig. 5 shows the data measured without supply of the makeup gas.

As shown in the data of Fig. 5, in the case of not using the makeup gas, the 44/46 ratio greatly increases as the temperature of the heating furnace 28 increases. This is because of the assumption that exchange between ¹⁶O contained in alumina which is the material of the reaction tube 30 and ¹⁸O of C¹⁶O¹⁸O generated by oxidation decomposition is accelerated as the temperature of the reaction tube 30 increases and C¹⁶O¹⁸O changes into C¹⁶O₂ accordingly. Due to such exchange between ¹⁶O contained in the material of the reaction tube 30 and the oxygen isotope contained in the composition after oxidation decomposition, the composition ratio after oxidation decomposition changes, and the accuracy of detection or quantitative determination for the oxygen-containing compound contained in the sample is degraded. Although not only the oxidation gas contains the inert gas, but also the inert gas is supplied as the carrier gas, the data of Fig. 5 clearly shows that oxygen exchange between the material of the reaction tube 30 and the composition after oxidation decomposition cannot be reduced with the inert gas contained in the oxidation gas and the inert gas which is the carrier gas.

On the other hand, as shown in the data of Fig. 4, in a case where the makeup gas is introduced into the reaction tube 30 together with the sample, the 44/46 ratio does not greatly change although slightly increasing at a heating furnace temperature of exceeding 900°C. The data shows that in a case where the sample is oxidatively decomposed while the inert gas is supplied, as the makeup gas, to the inlet portion of the reaction tube 30 separately from the oxidation gas and the carrier gas, an effect of decreasing an opportunity of the material of the reaction tube 30 and the composition after oxidation decomposition contacting each other, reducing exchange between ¹⁶O contained in the material of the reaction tube 30 and the oxygen isotope contained in the composition after oxidation decomposition, and reducing a change in the composition ratio of the sample after oxidation decomposition is obtained.

Referring back to Figs. 1 and 2, the analysis system 1 will be continuously described.

A suction pump 18 is connected to the mass spectrometer 8 through a flow path 20, and the inside of the mass spectrometer 8 is depressurized. The depressurization flow path 22 is in fluid connection with the suction pump 18. A stop valve 24 and a flow path resistance adjuster 26 are provided on the depressurization flow path 22. As shown in Fig. 2, in the GC-MS mode, the depressurization flow path 22 is in fluid communication with the outlet flow path 14, and the inside of the reaction tube 30 and the inside of the outlet flow path 14 are depressurized by the suction pump 18.

For example, the analysis system 1 is in the GC-MS mode until a target component is eluted from the separation column 4, and is switched to the GC-Comb-MS mode at timing of eluting the target component from the separation column 4 to oxidatively decompose the target component. Then, the mass spectrometric data on the composition after oxidation decomposition is acquired.

However, it is assumed as follows: if the internal pressure of the reaction tube 30 in the GC-MS mode is greatly different from the internal pressure of the reaction tube 30 in the GC-Comb-MS mode, the internal pressure of the reaction tube 30 greatly fluctuates when the GC-MS mode is switched to the GC-Comb-MS mode, and for this reason, time until the internal pressure of the reaction tube 30 is stabilized is long; meanwhile, if the target component is introduced into the reaction tube, the efficiency of oxidation decomposition of the target component is degraded. Moreover, it has been found that if the internal pressure of the reaction tube 30 greatly fluctuates, the base line of an output signal of the mass spectrometer 8 also greatly fluctuates and time required until the base line is stabilized is also long. If the time required until the base line of the output signal of the mass spectrometer 8 is stabilized is long, the target component is introduced into the mass spectrometer 8 before the base line is stabilized, leading to a probability that the accuracy of detection of the target component is degraded.

For these reasons, the analysis system 1 is designed such that a difference between the internal pressure of the reaction tube 30 in the GC-MS mode and the internal pressure of the reaction tube 30 in the GC-Comb-MS mode falls within an acceptable range (e.g., within 10% of the internal pressure of the reaction tube 30 in the GC-Comb-MS mode, but preferably as small range as possible) set considering fluctuation in the internal pressure of the reaction tube 30 when the GC-MS mode is switched to the GC-Comb-MS mode. In the analysis system 1, the flow path resistance adjuster 26 is provided on the depressurization flow path 22, and therefore, the efficiency of depressurization in a system from the oxidation decomposition device 6 to the suction pump 18 in the GC-MS mode approaches the efficiency of depressurization in the system from the oxidation decomposition device 6 to the suction pump 18 in the GC-Comb-MS mode. Thus, the difference between the internal pressure of the reaction tube 30 in the GC-MS mode and the internal pressure of the reaction tube 30 in the GC-Comb-MS mode falls within the acceptable range. The flow path resistance adjuster 26 may be a resistance tube with a fixed flow path resistance value, but may be, e.g., a needle valve or a proportional solenoid valve, the flow path resistance of which is variably adjustable.

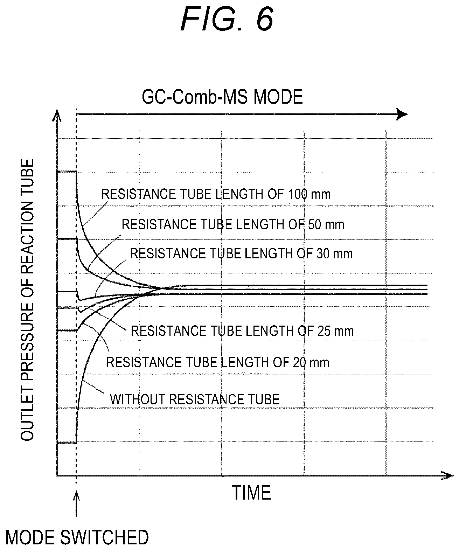

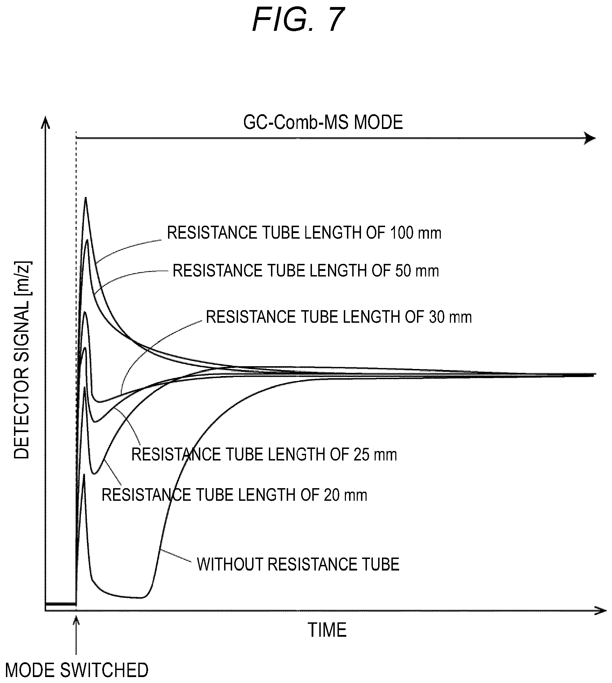

Fig. 6 shows data indicating results of verification on the influence of the length of the resistance tube which is the flow path resistance adjuster 26 on fluctuation in the outlet pressure of the reaction tube 30 when the GC-MS mode is switched to the GC-Comb-MS mode. Fig. 7 shows data indicating results of verification on the influence of the length of the resistance tube which is the flow path resistance adjuster 26 on fluctuation in the base line of the output signal of the mass spectrometer 8 when the GC-MS mode is switched to the GC-Comb-MS mode.

According to the data of Figs. 6 and 7, in the case of not providing the resistance tube on the depressurization flow path 22, the outlet pressure of the reaction tube 30 is extremely low in the GC-MS mode. Accordingly, when the GC-MS mode is switched to the GC-Comb-MS mode, the outlet pressure of the reaction tube 30 greatly fluctuates, the base line of the output signal (detector signal) of the mass spectrometer 8 also greatly fluctuates, and the time required until the base line is stabilized increases. As the flow path resistance of the depressurization flow path 22 increases by the resistance tube provided on the depressurization flow path 22, the internal pressure of the reaction tube 30 in the GC-MS mode increases. In the case of providing the resistance tube with a length of 30 mm, fluctuation in the outlet pressure of the reaction tube 30 is the smallest, and fluctuation in the base line of the detector signal is also the smallest. On the other hand, in a case where the length of the resistance tube is 50 mm or more, the internal pressure of the reaction tube 30 in the GC-MS mode is higher than that in the GC-Comb-MS mode, and therefore, the pressure greatly fluctuates when the GC-MS mode is switched to the GC-Comb-MS mode.

The above-described verification results show as follows: the flow path resistance of the depressurization flow path 22 incorporated into the system from the oxidation decomposition device 6 to the suction pump 18 in the GC-MS mode is moderately adjusted by the flow path resistance adjuster 26 so that fluctuation in the internal pressure of the reaction tube 30 when the GC-MS mode is switched to the GC-Comb-MS mode can be decreased.

Note that the embodiment described above is merely one exemplary embodiment of the analysis system according to the present invention. m...

### LIST OF REFERENCE SIGNS

- 1: Analysis System
- 2: Sample Vaporization Chamber
- 4: Separation Column
- 6: Oxidation Decomposition Device
- 10: Switching Valve
- 12, 14, 16, 20, 22: Flow Path
- 18: Suction Pump
- 24: Stop Valve
- 26: Flow Path Resistance Adjuster
- 28: Heating Furnace
- 30: Reaction Tube
- 32: Interface
- 33: Inlet
- 34: Outlet Adaptor
- 35: Outlet
- 36: Oxidation Gas Supplier
- 38: Makeup Gas Supplier
- 40: Outer Tube
- 42: Internal Space
- 48: Holder
- 50, 56: Makeup Gas Introduction Flow Path
- 52: Oxidation Gas Introduction Flow Path
- 54: Packing
- 58, 60, 62: O-Ring

## Claims

1. An analysis system (1) for detecting and/or quantitatively determining a compound containing a specific oxygen component in a sample, comprising:
an oxidation decomposition device (6) having an inlet (33) and an outlet (35) and configured to oxidatively decompose the sample introduced through the inlet to discharge the sample through the outlet; and
a detector (8) configured to detect an oxidation reactant oxidatively decomposed by the oxidation decomposition device,
wherein the oxidation decomposition device includes
a reaction tube (30) having one end and another end such that the one end is arranged on an inlet side and the another end is arranged on an outlet side and configured to oxidatively decompose the sample inside,
a heating furnace (28) housing the reaction tube inside and configured to heat the reaction tube,
an oxidation gas supplier (36) configured to supply oxidation gas used for oxidizing the sample and containing an oxygen component of an isotope different from the specific oxygen component,
a makeup gas supplier (38) configured to supply makeup gas which is inert gas not influencing oxidation decomposition of the sample, and
**characterised in that** the system (1) further comprises an interface (32) having a structure of introducing the oxidation gas supplied from the oxidation gas supplier and the makeup gas supplied from the makeup gas supplier into the reaction tube together with the sample introduced through the inlet.

2. The analysis system according to claim 1, wherein
the oxidation gas supplied from the oxidation gas supplier and the makeup gas supplied from the makeup gas supplier are supplied to the interface through different flow paths.

3. The analysis system according to claim 2, wherein
the interface includes an internal space where the sample introduced through the inlet, the oxidation gas, and the makeup gas are joined together in the reaction tube, an oxidation gas introduction flow path through which the oxidation gas supplied from the oxidation gas supplier is introduced into the internal space, and a makeup gas introduction flow path through which the makeup gas supplied from the makeup gas supplier is introduced into the internal space, and has a structure of introducing the sample, the oxidation gas, and the makeup gas joined together in the internal space into the reaction tube from the one end thereof.

4. The analysis system according to claim 1, wherein
at least an inner surface of the reaction tube is made of a heat-resisting material containing oxide.

5. The analysis system according to claim 4, wherein
the heat-resisting material is alumina.

6. The analysis system according to claim 1, further comprising:
a sample supply device having a configuration of supplying the sample downstream by carrier gas;
a mass spectrometer which is the detector;
a switching mechanism configured to switch flow path connection; and
a suction pump configured to depressurize an inside of the reaction tube of the oxidation decomposition device,
wherein by switching by the switching mechanism, any of a first state in which the mass spectrometer is in fluid connection with downstream of the sample supply device without the oxidation decomposition device interposed between the sample supply device and the mass spectrometer and a second state in which the inlet of the oxidation decomposition device is in fluid connection with the downstream of the sample supply device and the mass spectrometer is in fluid connection with downstream of the outlet of the oxidation decomposition device is brought, and
the suction pump is in fluid connection with downstream of the oxidation decomposition device in the first state, and a difference between an internal pressure of the reaction tube in the first state and an internal pressure of the reaction tube in the second state falls within an acceptable range set considering a degree of fluctuation in the internal pressure of the reaction tube when the switching mechanism switches the first state to the second state.

7. The analysis system according to claim 6, wherein
in the first state, the suction pump is in fluid connection with the mass spectrometer simultaneously when the suction pump is in fluid connection with the downstream of the oxidation decomposition device, and in the second state, the suction pump is in fluid connection with the mass spectrometer, and
a resistance of a flow path incorporated into between the oxidation decomposition device and the suction pump in the first state is set such that an efficiency of depressurization in a system from the oxidation decomposition device to the suction pump in the first state and an efficiency of depressurization in the system from the oxidation decomposition device to the suction pump in the second state are substantially identical to each other.

8. The analysis system according to claim 6, wherein
the acceptable range is within 10% of the internal pressure of the reaction tube in the second state.

9. The analysis system according to claim 6, wherein
the sample supply device is a gas chromatograph.

## Patentansprüche

1. Analysesystem (1) zum Detektieren und/oder quantitativen Bestimmen einer Verbindung, die eine spezifische Sauerstoffkomponente enthält, in einer Probe, umfassend:
eine Oxidationszersetzungsvorrichtung (6) mit einem Einlass (33) und einem Auslass (35), die dazu ausgelegt ist, die über den Einlass eingebrachte Probe oxidativ zu zersetzen, um die Probe über den Auslass auszulassen; und
einen Detektor (8), der dazu ausgelegt ist, einen durch die Oxidationszersetzungsvorrichtung oxidativ zersetzten Oxidationsreaktanten zu detektieren,
wobei die Oxidationszersetzungsvorrichtung ein Reaktionsrohr (30) umfasst, das ein Ende und ein anderes Ende aufweist, sodass das eine Ende an einer Einlassseite und das andere Ende an einer Auslassseite angeordnet ist, und das dazu ausgelegt ist, die Probe darin zu zersetzen,
einen Heizofen (28), der das Reaktionsrohr im Inneren aufnimmt und dazu ausgelegt ist, das Reaktionsrohr zu erhitzen,
eine Oxidationsgaszufuhreinheit (36), die dazu ausgelegt, Oxidationsgas, das zum Oxidieren der Probe verwendet wird und eine Sauerstoffkomponente eines Isotops, das sich von der spezifischen Sauerstoffkomponente unterscheidet, enthält, zuzuführen,
eine Make-up-Gas-Zufuhreinheit (38), die dazu ausgelegt ist, Make-up-Gas, das ein Inertgas ist, welches die Oxidationszersetzung der Probe nicht beeinflusst, zuzuführen, und
**dadurch gekennzeichnet, dass** das System (1) ferner einen Übergangsbereich (32) umfasst, der eine Struktur zum Einbringen des von der Oxidationsgaszufuhreinheit zugeführten Oxidationsgases und des von der Make-up-Gas-Zufuhreinheit zugeführten Make-up-Gases zusammen mit der über den Einlass eingebrachten Probe in das Reaktionsrohr umfasst.

2. Analysesystem nach Anspruch 1, wobei
das von der Oxidationsgaszufuhreinheit zugeführte Oxidationsgas und das von der Make-up-Gas-Zufuhreinheit zugeführte Make-up-Gas über verschiedene Strömungspfade zu dem Übergangsbereich zugeführt werden.

3. Analysesystem nach Anspruch 2, wobei
der Übergangsbereich einen Innenraum, wo die über den Einlass eingebrachte Probe, das Oxidationsgas und das Make-up-Gas im Reaktionsrohr zusammengeführt werden, einen Oxidationsgaseinbringungsströmungspfad, über den das von der Oxidationsgaszufuhreinheit zugeführte Oxidationsgas in den Innenraum eingebracht wird, und einen Make-up-Gas-Einbringungsströmungspfad, über den das von der Make-up-Gas-Zufuhreinheit zugeführte Make-up-Gas in den Innenraum eingebracht wird, umfasst und eine Struktur zum Einbringen der Probe, des Oxidationsgases und des Make-up-Gases, die in dem Innenraum zusammengeführt sind, in das Reaktionsrohr von dem einen Ende desselben aufweist.

4. Analysesystem nach Anspruch 1, wobei
zumindest eine Innenfläche des Reaktionsrohrs aus einem oxidhältigen, hitzebeständigen Material ausgebildet ist.

5. Analysesystem nach Anspruch 4, wobei
das hitzebeständige Material Aluminiumoxid ist.

6. Analysesystem nach Anspruch 1, ferner Folgendes umfassend:
eine Probenzufuhrvorrichtung mit einer Konfiguration zum Zuführen der Probe stromabwärts durch Trägergas;
ein Massenspektrometer, das der Detektor ist;
einen Schaltmechanismus, der dazu ausgelegt ist, die Strömungspfadverbindung zu schalten; und
eine Ansaugpumpe, die dazu ausgelegt ist, in einem Inneren des Reaktionsrohrs der Oxidationszersetzungsvorrichtung den Druck herabzusetzen,
wobei durch Schalten durch den Schaltmechanismus eines aus einem ersten Zustand, in dem das Massenspektrometer in Fluidverbindung mit stromabwärts der Probenzufuhrvorrichtung steht, ohne dass die Oxidationszersetzungsvorrichtung zwischen der Probenzufuhrvorrichtung und dem Massenspektrometer angeordnet ist, und einem zweiten Zustand, in dem der Einlass der Oxidationszersetzungsvorrichtung in Fluidverbindung mit stromabwärts der Probenzufuhrvorrichtung steht und das Massenspektrometer in Fluidverbindung mit stromabwärts des Auslasses der Oxidationszersetzungsvorrichtung steht, herbeigeführt wird, und
die Ansaugpumpe in dem ersten Zustand in Fluidverbindung mit stromabwärts der Oxidationszersetzungsvorrichtung steht, und eine Differenz zwischen einem Innendruck des Reaktionsrohrs in dem ersten Zustand und einem Innendruck des Reaktionsrohrs in dem zweiten Zustand in einen annehmbaren Bereich fällt, der unter Berücksichtigung eines Schwankungsausmaßes des Innendrucks des Reaktionsrohrs, wenn der Schaltmechanismus von dem ersten Zustand in den zweiten Zustand schaltet, eingestellt wurde.

7. Analysesystem nach Anspruch 6, wobei
die Ansaugpumpe in dem ersten Zustand gleichzeitig in Fluidverbindung mit dem Massenspektrometer steht, wenn die Ansaugpumpe in Fluidverbindung mit stromabwärts der Oxidationszersetzungsvorrichtung steht, und wobei die Ansaugpumpe in dem zweiten Zustand in Fluidverbindung mit dem Massenspektrometer steht, und
ein Widerstand eines Strömungspfads, der in dem ersten Zustand zwischen der Oxidationszersetzungsvorrichtung und der Ansaugpumpe vorliegt, derart eingestellt ist, dass die Wirksamkeit eines Druckablassens in einem System aus der Oxidationszersetzungsvorrichtung zu der Ansaugpumpe in dem ersten Zustand und die Wirksamkeit eines Druckablassens in dem System aus der Oxidationszersetzungsvorrichtung zu der Ansaugpumpe in dem zweiten Zustand im Wesentlichen identisch sind.

8. Analysesystem nach Anspruch 6, wobei
der annehmbare Bereich innerhalb von 10 % des Innendrucks des Reaktionsrohrs in dem zweiten Zustand ist.

9. Analysesystem nach Anspruch 6, wobei
die Probenzufuhrvorrichtung ein Gaschromatograph ist.

## Revendications

1. Système d'analyse (1) pour détecter et/ou déterminer quantitativement un composé contenant un composant oxygène spécifique dans un échantillon, comprenant :
un dispositif de décomposition par oxydation (6) présentant une entrée (33) et une sortie (35) et configuré pour décomposer par oxydation l'échantillon introduit par l'entrée pour décharger l'échantillon par la sortie ; et
un détecteur (8) configuré pour détecter un réactif d'oxydation décomposé par oxydation par le dispositif de décomposition par oxydation,
dans lequel le dispositif de décomposition par oxydation inclut
un tube de réaction (30) présentant une première extrémité et une autre extrémité de telle sorte que la première extrémité soit agencée sur un côté d'entrée et l'autre extrémité soit agencée sur un côté de sortie, et configuré pour décomposer par oxydation l'échantillon en son sein,
un four de chauffage (28) logeant le tube de réaction en son sein et configuré pour chauffer le tube de réaction,
un dispositif de fourniture de gaz d'oxydation (36) configuré pour fournir du gaz d'oxydation utilisé pour oxyder l'échantillon et contenant un composant oxygène d'un isotope différent du composant oxygène spécifique,
un dispositif de fourniture de gaz d'appoint (38) configuré pour fournir du gaz d'appoint qui est un gaz inerte n'influençant pas la décomposition par oxydation de l'échantillon, et
**caractérisé en ce que** le système (1) comprend en outre une interface (32) présentant une structure d'introduction du gaz d'oxydation fourni par le dispositif de fourniture de gaz d'oxydation et du gaz d'appoint fourni par le dispositif de fourniture de gaz d'appoint jusque dans le tube de réaction avec l'échantillon introduit par l'entrée.

2. Système d'analyse selon la revendication 1, dans lequel
le gaz d'oxydation fourni par le dispositif de fourniture de gaz d'oxydation et le gaz d'appoint fourni par le dispositif de fourniture de gaz d'appoint sont fournis à l'interface par différents trajets d'écoulement.

3. Système d'analyse selon la revendication 2, dans lequel
l'interface inclut un espace interne dans lequel l'échantillon introduit par l'entrée, le gaz d'oxydation et le gaz d'appoint sont réunis dans le tube de réaction, un trajet d'écoulement d'introduction de gaz d'oxydation via lequel le gaz d'oxydation fourni par le dispositif de fourniture de gaz d'oxydation est introduit dans l'espace interne, et un trajet d'écoulement d'introduction de gaz d'appoint via lequel le gaz d'appoint fourni par le dispositif de fourniture de gaz d'appoint est introduit dans l'espace interne, et présente une structure d'introduction de l'échantillon, du gaz d'oxydation et du gaz d'appoint réunis dans l'espace interne jusque dans le tube de réaction à partir de la première extrémité de celui-ci.

4. Système d'analyse selon la revendication 1, dans lequel
au moins une surface intérieure du tube de réaction est constituée d'un matériau résistant à la chaleur contenant de l'oxyde.

5. Système d'analyse selon la revendication 4, dans lequel
le matériau résistant à la chaleur est de l'alumine.

6. Système d'analyse selon la revendication 1, comprenant en outre :
un dispositif de fourniture d'échantillon présentant une configuration de fourniture de l'échantillon en aval par un gaz porteur ;
un spectromètre de masse qui est le détecteur ;
un mécanisme de commutation configuré pour commuter la connexion de trajet d'écoulement ; et
une pompe d'aspiration configurée pour dépressuriser un intérieur du tube de réaction du dispositif de décomposition par oxydation,
dans lequel, par commutation par l'intermédiaire du mécanisme de commutation, l'un quelconque d'un premier état dans lequel le spectromètre de masse est en connexion fluidique avec l'aval du dispositif de fourniture échantillon sans le dispositif de décomposition par oxydation interposé entre le dispositif de fourniture d'échantillon et le spectromètre de masse, et d'un second état dans lequel l'entrée du dispositif de décomposition par oxydation est en connexion fluidique avec l'aval du dispositif de fourniture d'échantillon et le spectromètre de masse est en connexion fluidique avec l'aval de la sortie du dispositif de décomposition par oxydation, est amené, et
la pompe d'aspiration est en connexion fluidique avec l'aval du dispositif de décomposition par oxydation dans le premier état, et une différence entre une pression interne du tube de réaction dans le premier état et une pression interne du tube de réaction dans le second état se situe dans une plage acceptable définie compte tenu d'un degré de fluctuation de la pression interne du tube de réaction lorsque le mécanisme de commutation commute le premier état vers le second état.

7. Système d'analyse selon la revendication 6, dans lequel
dans le premier état, la pompe d'aspiration est en communication fluidique avec le spectromètre de masse simultanément lorsque la - pompe d'aspiration est en communication fluidique avec l'aval du dispositif de décomposition par oxydation, et dans le second état, la pompe d'aspiration est en communication fluidique avec le spectromètre de masse, et
une résistance d'un trajet d'écoulement incorporé entre le dispositif de décomposition par oxydation et la pompe d'aspiration dans le premier état est définie de telle sorte qu'une efficacité de dépressurisation dans un système depuis le dispositif de décomposition par oxydation jusqu'à la pompe d'aspiration dans le premier état et une efficacité de dépressurisation dans le système depuis le dispositif de décomposition par oxydation jusqu'à la pompe d'aspiration dans le second état sont sensiblement identiques l'une à l'autre.

8. Système d'analyse selon la revendication 6, dans lequel
la plage acceptable est comprise dans 10 % de la pression interne du tube de réaction dans le second état.

9. Système d'analyse selon la revendication 6, dans lequel
le dispositif de fourniture d'échantillon est un chromatographe en phase gazeuse.
